# EUROPÄISCHE PATENTANMELDUNG

(11) **EP 2 492 661 A1**
(43) Veröffentlichungstag der Anmeldung: **29.08.2012**
(21) Anmeldenummer: 12400006.8
(22) Anmeldetag: 17.02.2012
(51) Int. Cl.: G01M 99/00, B66D 1/00

(54) **Vorrichtung zum Testen von Seilwinden**

(30) Priorität: 24.02.2011 DE 102011013246
(71) Anmelder: ESW GmbH, 22876 Wedel (DE)
(72) Erfinder: Duemmong, Urban, 22880 Wedel (DE); Schreutelkamp, Hendrick, 25436 Tornesch (DE)
(74) Vertreter: Klickow, Hans-Henning

(57) **Zusammenfassung**

Die Vorrichtung dient zum Testen von Seilwinden. Es liegt ein modularer Aufbau vor und es wird ein Haltemodul, ein Steuermodul, ein Lastenmodul sowie ein Wickelmodul verwendet.

## Beschreibung

Die Erfindung betrifft eine Vorrichtung zum Testen von Seilwinden.

Insbesondere bezieht sich die Erfindung auf ein modulares und mobiles Testsystem für Rettungswinden, die zur Verwendung im Bereich von Hubschraubern vorgesehen sind.

Bekannte Testvorrichtungen sind nicht in ausreichender Weise dafür geeignet, einfach transportiert und flexibel genutzt zu werden. Darüber hinaus sind bei einer Benutzung derartiger bekannter Testeinrichtungen Gegengewichte erforderlich.

Aufgabe der vorliegenden Erfindung ist es, eine Vorrichtung der einleitend genannten Art derart zu konstruieren, dass eine flexible Nutzung sowie ein einfacher Transport unterstützt werden.

Diese Aufgabe wird erfindungsgemäß dadurch gelöst, dass ein modularer Aufbau derart vorliegt, dass ein Haltemodul, ein Steuermodul, ein Lastmodul sowie ein Wickelmodul verwendet sind.

Das modular aufgebaute Testsystem kann ohne externe Verankerung sowie ohne externe Gegengewichte verwendet werden. Es sind somit keine zusätzlichen Komponenten erforderlich, um eine Belastungssituation an einem am Seil montierten Haken beziehungsweise am Ende des Seils zu simulieren. Eine Verwendung der Vorrichtung ist hierdurch ortsungebunden und mobil möglich.

Durch den modularen Aufbau wird die Durchführung unterschiedlicher Prüfungen der Seilwinden unterstützt. Eine Verwendung der Vorrichtung ist sowohl in einem Werkstattbereich als auch direkt an einem Einsatzort der Seilwinden, insbesondere am Fluggerät, möglich.

Die durchgeführten Prüfungen können sich auf unterschiedliche Funktionalitäten der Seilwinden beziehen. Beispielsweise kann dies zu vorgegebenen Zeitpunkten innerhalb von Wartungsintervallen oder zur Detektion sowie zur Behebung von Fehlern erfolgen. Ebenfalls wird eine Abnahme nach einer durchgeführten Reparatur der Seilwinde unterstützt.

Gemäß einer bevorzugten Ausführungsform wird daran gedacht, für jede oder zumindest für einige der vorgesehenen Prüfungen gesonderte Prüfmodule zu realisieren. Die Prüfmodule Können sich dabei bei
spielsweise auf jeweils eine oder mehrere der folgenden Funktionen beziehen: Kabelinspektion, Kabeltausch, Seilbelastungstest, Test des Lastsensors, Test der Rutschkupplung, Fehlererkennung, Statusabfrage.

Wesentliche Eigenschaften der erfindungsgemäßen Vorrichtung sind beispielsweise, die Aufteilung in vier einzelne Module sowie die Zuordnung der Aufgaben zu diesen Modulen. Darüber hinaus ist eine Ausbildung des Haltemoduls zur Aufnahme von Kräften wesentlich. Die entsprechende Ausbildung des Haltemoduls ermöglicht eine flexible und wirtschaftliche Anwendung der Module für unterschiedliche Prüftiefen.

In den Zeichnungen sind Ausführungsbeispiele der Erfindung schematisch dargestellt. Es zeigen:
- Fig. 1: Eine perspektivische Darstellung einer Aufnahmeeinrichtung als Windenhalter,
- Fig. 2: eine perspektivische Darstellung eines Lastmoduls,
- Fig. 3: eine perspektivische Darstellung eines Wickelmoduls,
- Fig. 4: eine perspektivische Darstellung der Kombination eines Haltemoduls und eines Wickelmoduls,
- Fig. 5: eine perspektivische Darstellung der Kombination eines Lastmoduls und eines Wickelmoduls,
- Fig.6: eine perspektivische Darstellung einer Kombination eines Haltemoduls, eines Lastmoduls und eines Wickelmoduls.

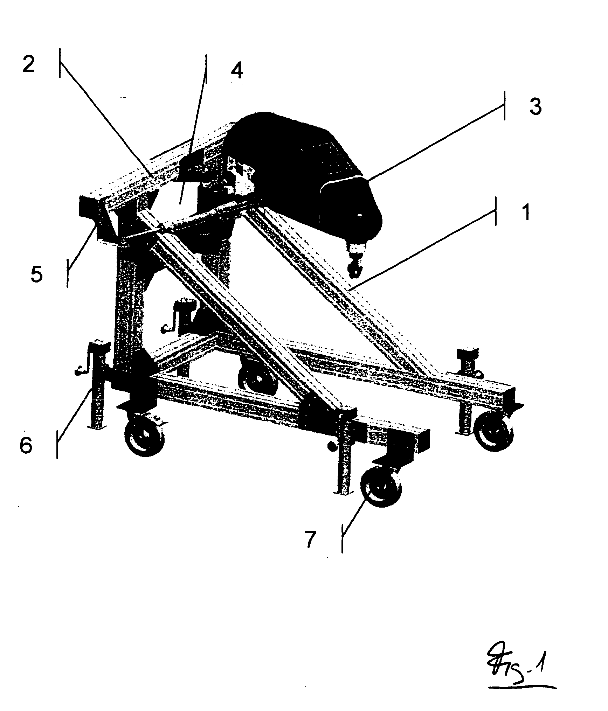

Gemäß der Ausführungsform in Fig. 1 besteht das Haltemodul (1) aus einer Mehrzahl von Streben, die ein fahrbares Traggestell bereitstellen. An einer Unterseite des Haltemoduls (1) sind hierzu Rollen beziehungsweise Räder angebracht. Das Haltemodul (1) besitzt eine Aufnahmeeinrichtung (2) für eine Winde (3). Darüber hinaus sind ein Anschlussfeld (4) sowie ein Halter (5) verwendet. Die am Haltemodul (1) angebrachten Räder oder Rollen können beispielsweise als Lenkrollen (7) realisiert sein. Unter Verwendung von höhenverstellbaren Stempeln (6) kann eine Ausrichtung und/oder Stabilisierung des Haltemoduls (1) erfolgen. Insbesondere dienen die Stempel (6) auch dazu, das Haltemodul (1) auf Submodulen absetzen zu können.

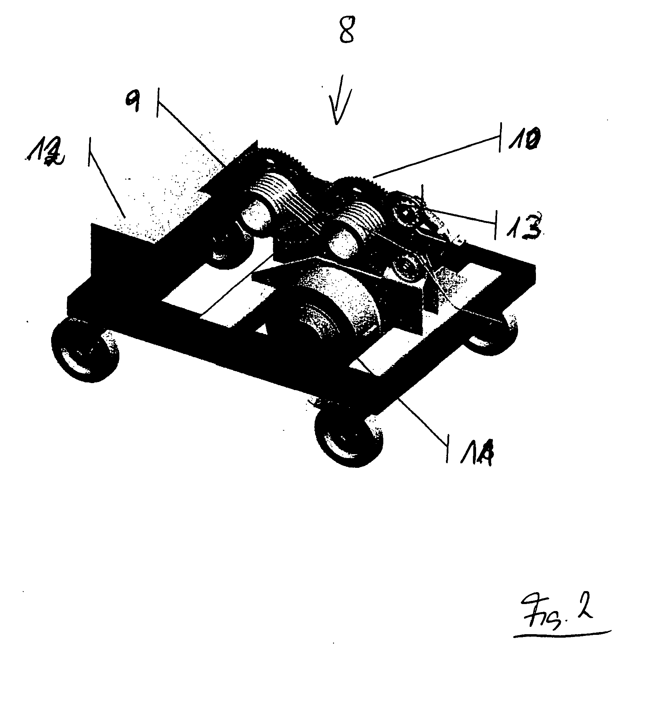

Fig. 2 zeigt ein Lastmodul (8), das mit einem Spillantrieb (9) versehen ist. Der Spillantrieb (9) wird über einen Zahnradsatz (10) von einem Motor (11) angetrieben. Über eine Motorregelung (12) kann ein konstanter Zug am Seil vorgegeben werden. Die Seilgeschwindigkeit wird von der Winde vorgegeben.

Ein Seileinlauf (13) ist mit einer Einrichtung zur Messung der Seilzugkraft sowie einer Abschaltung für die Winde bei zu hohem Seilzug ausgestattet.

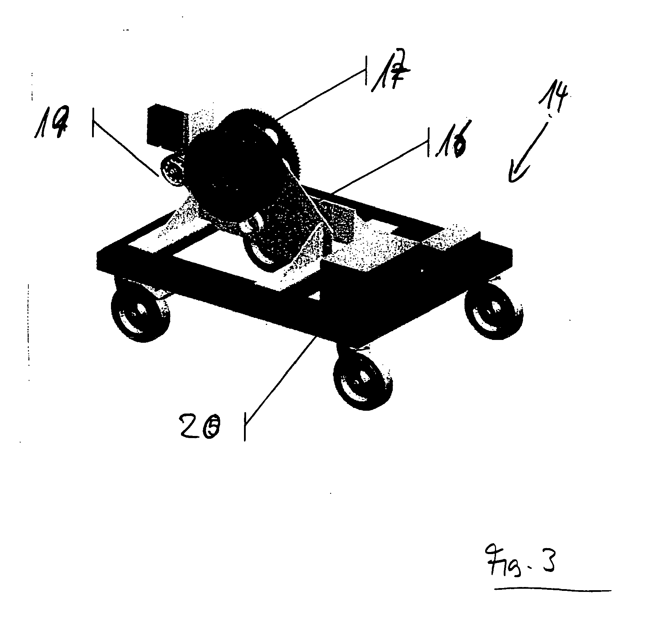

Fig. 3 zeigt ein Wickelmodul (14). Das Wickelmodul (14) besitzt eine Wickelvorrichtung (15), die von einem Motor (16) angetrieben ist. Die Wickelvorrichtung (11) dient zur Aufnahme unterschiedlicher Kabeltrommeln (17). Eine Seilführung (18) dient zur Steuerung der Seilablage auf der Kabeltrommel (17).

Eine Umlenkrolle (19) ist mit einer Überwachung für die Seilzugkraft sowie einer Abschaltung der Winde bei zu hohem Seilzug ausgestattet. Eine Motorsteuerung (20) weist eine Seilzugbegrenzung auf.

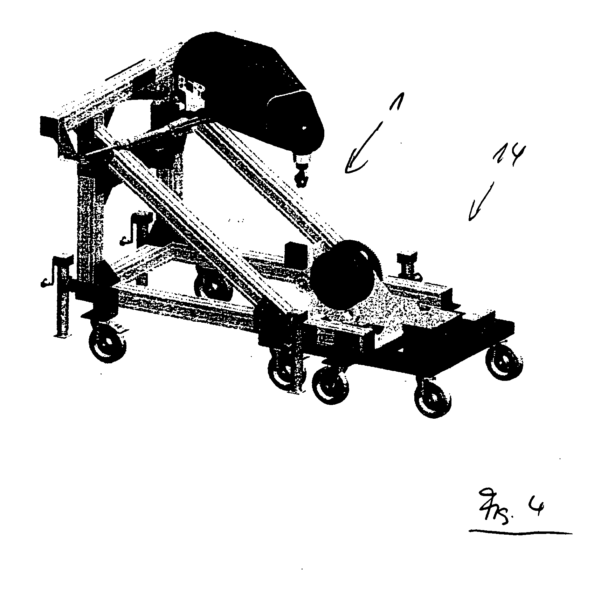

Fig. 4 zeigt die Kombination des Haltemoduls (1) mit dem Wickelmodul (14).

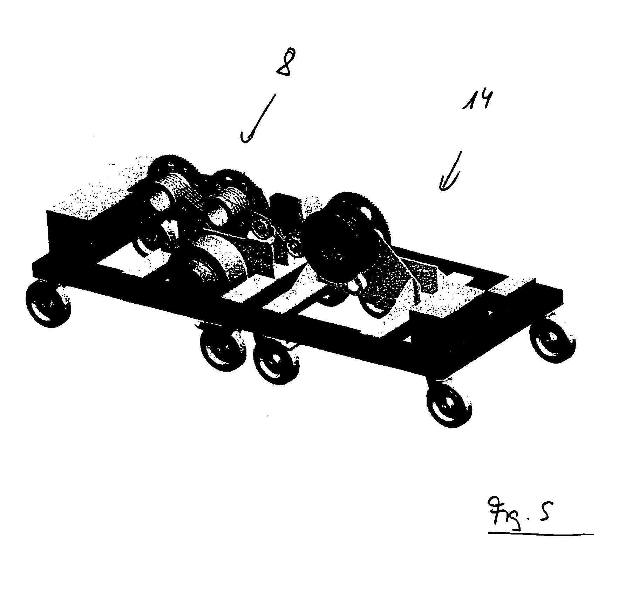

Fig. 5 zeigt die Kombination des Lastmoduls (8) mit dem Wickelmodul (14).

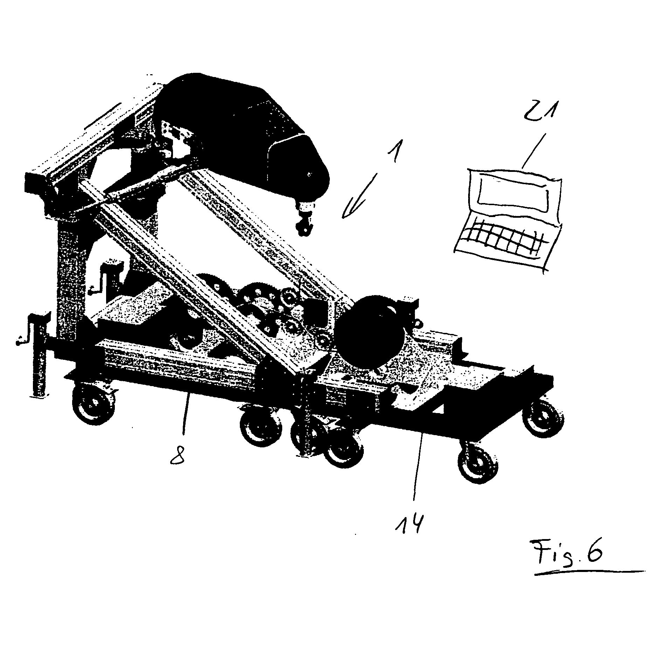

Fig. 6 veranschaulicht die Kombination des Haltmoduls (1) mit dem Lastmodul (8) und dem Wickelmodul (14).

Ein Steuermodul (21) kann beispielsweise als ein Computer, insbesondere ein Laptop ausgebildet sein. Die Kommunikation kann drahtlos oder schnurgebunden erfolgen.

Das Haltemodul (1) dient im Wesentlichen zur Aufnahme, zum Transport sowie zur Versorgung des Prüflings im Werkstattbereich. Das Steuermodul (21) dient im Wesentlichen zur Unterstützung der Prüfabläufe. Ebenfalls kann das Steuermodul (21) zur Diagnose des Prüflings benutzt werden. Das Lastmodul (8) dient zur Simulation verschiedener Belastungsszenarien. Dies umfasst sowohl dynamische als auch statische Prüfsituationen.

Das Wickelmodul (14) dient dem Seiltausch, der Inspektion sowie der vorübergehenden Aufbewahrung des Seils.

Um realistische Belastungen zu simulieren, können große Kräfte erzeugt werden. Insbesondere kann dies durch eine gegenseitige Verspannung des Haltemoduls (1) sowie von Testmodulen erfolgen. Die Module können hierbei als kombinierbare und verfahrbare Wagen ausgebildet sein. Die Wagen werden unter das Haltemodul (1) geschoben und können im Belastungsfall verspannt werden.

Als Motor (16) für die Wickelvorrichtung (15) wird vorzugsweise ein stromgeregelter Motor verwendet. Ein derartiger Motor kann ein konstantes Zugmoment auf das Seil aufbringen. Die Seilgeschwindigkeit wird durch die Winde vorgegeben. Das vom Motor vorgegebene Drehmoment und damit der Seilzug ist einstellbar.

## Patentansprüche

1. Vorrichtung zum Testen von Seilwinden, **dadurch gekennzeichnet, dass** ein modularer Aufbau derart vorliegt, dass ein Haltemodul (1), ein Steuermodul (21), ein Lastmodul (8) sowie ein Wickelmodul (14) verwendet sind.

2. Vorrichtung nach Anspruch 1, **dadurch gekennzeichnet, dass** die Seilwinde als Rettungswinde ausgebildet ist.

3. Vorrichtung nach Anspruch 1, **dadurch gekennzeichnet, dass** die Seilwinde an einem Hubschrauber anordbar ist.

4. Vorrichtung nach einem der Ansprüche 1 bis 3, **dadurch gekennzeichnet, dass** das Haltemodul zur Aufnahme der Seilwinde ausgebildet ist.

5. Vorrichtung nach einem der Ansprüche 1 bis 4, **dadurch gekennzeichnet, dass** das Steuermodul (21) zur Durchführung von Bedienfunktionen ausgebildet ist.

6. Vorrichtung nach einem der Ansprüche 1 bis 5, **dadurch gekennzeichnet, dass** das Lastmodul (8) zur Simulation von Belastungen ausgebildet ist.

7. Vorrichtung nach einem der Ansprüche 1 bis 6, **dadurch gekennzeichnet, dass** das Wickelmodul (14) zum Seiltausch sowie zur Aufbewahrung des Seils ausgebildet ist.

8. Vorrichtung nach einem der Ansprüche 1 bis 7, **dadurch gekennzeichnet, dass** mindestens eines der Module (1, 8, 14) als ein verfahrbarer Wagen ausgebildet ist.

9. Vorrichtung nach Anspruch 8, **dadurch gekennzeichnet, dass** mindestens eines der Modul (8, 14) relativ zum Haltemodul (1) verspannbar ist.
